# FASCICULE DE BREVET EUROPEEN

(11) **EP 0 688 394 B1**
(45) Date de publication et mention de la délivrance du brevet: **30.10.1996**
(21) Numéro de dépôt: 94909097.1
(22) Date de dépôt: 01.03.1994
(51) Int. Cl.: F01N 7/00, F01N 3/20, F02D 41/14

(54) **PROCEDE DE SURVEILLANCE DE L'EFFICACITE D'UN POT CATALYTIQUE CHAUFFE**
VERFAHREN ZUR ÜBERWACHUNG DES WIRKUNGSGRADES EINES BEHEIZTEN KATALYTISCHEN UMWANDLERS
HEATED CATALYTIC CONVERTER EFFICIENCY MONITORING METHOD

(30) Priorité: 12.03.1993 FR 9302871
(43) Date de publication de la demande: 27.12.1995
(73) Titulaire: SIEMENS AUTOMOTIVE S.A., 31036 Toulouse Cédex (FR)
(72) Inventeur: ATANASYAN, Alain, F-31170 Tournefeuille (FR)
(74) Mandataire: Fuchs, Franz-Josef, Dr.-Ing.
(86) Numéro de dépôt international: EP9400594
(87) Numéro de publication internationale: WO9420737

(56) Documents cités:
- US-A- 5 159 810
- PATENT ABSTRACTS OF JAPAN vol. 017, no. 318 (M-1431) 17 Juin 1993 & JP,A,05 033 632 (TOKYO GAS CO LTD) 9 Février 1993

## Description

La présente invention est relative a un procédé de surveillance de l'efficacité d'un pot catalytique chauffé et, plus particulièrement, d'un tel pot placé en amont d'un pot catalytique trifonctionnel dans une ligne de sortie des gaz d'échappement d'un moteur à combustion interne.

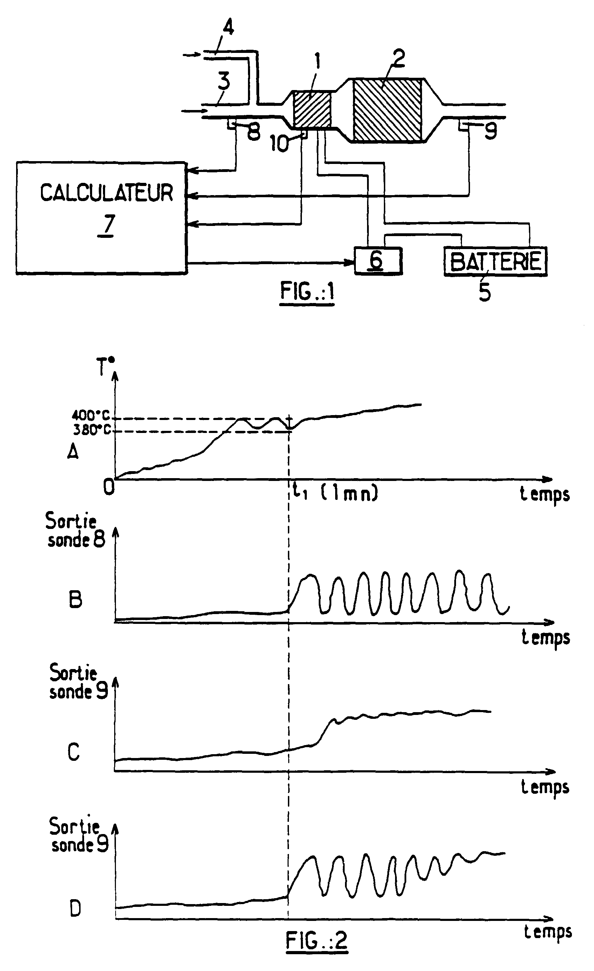

On connaît un dispositif de traitement des gaz d'échappement d'un moteur à combustion interne qui comprend, comme représenté à la figure 1 du dessin annexé, d'une part deux pots catalytiques 1 et 2 disposés dans la ligne 3 d'échappement du moteur et, d'autre part, des moyens 4 d'injection d'air dans cette ligne, en amont du pot catalytique 1. On pourra se référer à cet égard au document No. 910840 intitulé "New Potential Exhaust Gas After-treatment Technologies for Clean Car Legislation" de I. Gottberg et consorts, publié par la "Society of Automotive Engineers" des Etats-Unis d'Amérique.

Comme décrit dans ce document, le pot catalytique 1 est un pot chauffé, au démarrage à froid du moteur, par une source d'énergie électrique 5 telle qu'une batterie connectée au pot 1 à travers un module de puissance 6 commandé par un calculateur 7. Le pot chauffé 1 comprend un support métallique recouvert d'un placage en métal précieux tel que le platine, susceptible de catalyser l'oxydation d'hydrocarbures imbrûlés et de l'oxyde de carbone pour les transformer en espèces chimiques moins nocives. Le passage d'un courant électrique dans ce support ainsi recouvert provoque un échauffement par effet Joule du pot propre à porter rapidement les gaz d'échappement qui le traverse à une température autorisant ces réactions d'oxydation. L'injection d'air 4 dans ces gaz d'échappement assure l'apport d'oxygène nécessaire à ces réactions. Les réactions d'oxydation ainsi déclenchées sont exothermiques et contribuent a réchauffer le pot catalytique 2 placé en aval du pot catalytique chauffé 1, de manière que celui-ci puisse, après la période de démarrage à froid du moteur, prendre en charge l'essentiel du traitement de toutes les espèces nocives contenues dans les gaz d'échappement du moteur c'est-à-dire, outre les hydrocarbures imbrûlés et l'oxyde de carbone déjà mentionnés, les oxydes d'azote qui doivent être réduits en espèces moins nocives. Le pot catalytique 2 est alors appelé "trifonctionnel" du fait de sa triple action sur les hydrocarbures imbrûlés, l'oxyde de carbone et lesdits oxydes d'azote.

Bien entendu, de tels moyens de traitement des gaz d'échappement ne sont efficaces que si les pots catalytiques utilisés sont en bon état de fonctionnement. Or les placages de métaux précieux utilisés pour oxyder certains gaz d'échappement (le platine par exemple), pour réduire certains autres (le rhodium par exemple) ou pour stocker de l'oxygène (le cérium) se dégradent avec le temps sous l'effet de "poisons" ou d'autres agressions telles que celles qui résultent de combustions d'hydrocarbures imbrûlés dans le pot. La surface active du placage métallique diminue alors ce qui abaisse l'efficacité globale du pot.

Des normes antipollution de plus en plus sévères prévoient maintenant que les véhicules automobiles soient équipés de moyens embarqués de surveillance permanente de l'efficacité des pots catalytiques utilisés, de manière qu'une dégradation de cette efficacité soit détectable et qu'on puisse y porter remède avant que celle-ci ne s'abaisse en dessous d'un niveau minimum admissible.

On décrit à cet effet dans le document FR-A-2 682 993 de la demanderesse, ou encore dans le document EP 0 466 311, un procédé de surveillance de l'efficacité d'un pot catalytique du type "trifonctionnel", tel que le pot catalytique 2 du dispositif de la figure 1, ce procédé étant basé sur une évaluation de la capacité du pot à stocker de l'oxygène.

Un tel procédé est applicable lorsque le pot catalytique considéré a atteint sa température de fonctionnement. Il convient cependant, dans le cas où au moins un pot catalytique est chauffé, de surveiller son efficacité le plus tôt possible, c'est-à-dire comme on l'a vu plus haut, de surveiller sa capacité à :
1) oxyder les hydrocarbures imbrûlés et l'oxyde de carbone,
2) porter rapidement les gaz d'échappement et le pot catalytique trifonctionnel placé en aval à une température minimum de fonctionnement, de l'ordre de 350 à 400°C, de manière à réduire au minimum la production d'espèces nocives.

La présente invention a donc pour but de fournir un procédé de surveillance de l'efficacité d'un pot catalytique chauffé placé dans la ligne de sortie des gaz d'échappement d'un moteur à combustion interne.

On atteint ce but de l'invention, ainsi que d'autres qui apparaîtront à la lecture de la description qui va suivre, avec un procédé de surveillance de l'efficacité d'un pot catalytique chauffé placé dans une ligne de sortie des gaz d'échappement d'un moteur à combustion interne associé à a) des moyens de régulation en boucle fermée de la composition d'un mélange air/carburant d'alimentation du moteur par l'intermédiaire d'au moins un injecteur de carburant dont le temps d'ouverture est commandé par ces moyens et b) des moyens de surveillance de l'efficacité du pot catalytique comprenant une sonde à oxygène à signal de sortie commutant entre deux niveaux et placée en aval du pot, ces moyens de surveillance commandant une variation temporelle forcée du temps d'ouverture de l'injecteur en relation fonctionnelle avec l'excursion de la capacité de stockage d'oxygène du pot pour déduire d'une oscillation du signal de sortie de la sonde une efficacité insuffisante du pot. Suivant la présente invention, ce procédé est remarquable en ce que, lors d'un démarrage à froid du moteur avec régulation en boucle ouverte de la richesse du mélange air/carburant, on commande l'activation des moyens de régulation en boucle fermée de ce mélange quand la température du pot chauffé dépasse une température Tₛ prédéterminée, et on déduit de l'apparition éventuelle d'une oscillation dans le signal de sortie de la sonde, une efficacité insuffisante du pot catalytique chauffé.

D'autres caractéristiques de la présente invention apparaîtront à la lecture de la description qui va suivre et à l'examen du dessin annexé dans lequel :
- la figure 1 est un schéma d'un dispositif de traitement de gaz d'échappement conçu pour la mise en oeuvre du procédé suivant la présente invention, et
- la figure 2 est un jeu de chronogrammes utiles à l'explication du fonctionnement du procédé suivant l'invention.

On se réfère à la figure 1, déjà partiellement décrite dans le préambule de la présente demande de brevet. Sur cette figure apparaissent des première et deuxième sondes à oxygène 8 et 9, respectivement, placées en amont et en aval, respectivement, des pots catalytiques 1 et 2. Des moyens de régulation en boucle fermée de la composition du mélange air/carburant qui alimentent le moteur (non représenté) sont incorporés classiquement au calculateur 7, celui-ci prenant en compte à cet effet divers paramètres tels que la température de l'eau de refroidissement, la température de l'air, la pression dans le collecteur d'admission du moteur, le régime du moteur, etc... et le niveau du signal de sortie de la sonde à oxygène 8, dite "de régulation".

Suivant les enseignements contenus dans la demande de brevet français précitée, incorporés à la présente demande par référence, l'autre sonde 9 est une sonde dite "de diagnostic" et sert à surveiller l'efficacité du pot catalytique trifonctionnel 2. Elle est du type classique, à signal de sortie commutant entre deux niveaux de tension sensiblement fixes quand la richesse en oxygène des gaz d'échappement du moteur passe par un niveau prédéterminé en relation avec une composition stoechiométrique du mélange air/carburant d'alimentation du moteur. Cette composition est détectée indirectement par la sonde 9 dont le signal de sortie alimente le calculateur 7, muni des moyens nécessaires à l'exécution du procédé de surveillance décrit dans la demande de brevet précitée. Suivant celui-ci, on mesure, en régulation et en régime stabilisé, un temps d'ouverture d'injecteur propre à assurer la stoechiométrie du mélange air/carburant, on impose ensuite au temps d'ouverture, pendant un intervalle de temps prédéterminé, une variation temporelle périodique d'excursion symétrique prédéterminée en amplitude et en forme autour d'un temps d'ouverture de base choisi à partir du temps d'ouverture mesuré, et on modifie progressivement et de manière monotone le temps d'ouverture de base utilisé au cours d'intervalles de temps successifs, de manière à passer par un centrage de l'excursion du temps d'ouverture sur celle de la capacité de stockage d'oxygène du pot catalytique trifonctionnel, et on tire de l'apparition éventuelle d'une oscillation de ce signal, une évaluation de l'efficacité du catalyseur.

Plus particulièrement, on fixe l'excursion et la fréquence de la variation temporelle du temps d'ouverture à des valeurs correspondant à une capacité minimum acceptable d'absorption d'oxygène par le pot catalytique et on diagnostique une capacité insuffisante du pot catalytique en cas d'apparition d'une oscillation dans le signal de sortie de la sonde à oxygène lors de la modification progressive du temps d'ouverture de base. On se référera à la demande de brevet précitée pour plus de détail concernant le procédé de surveillance décrit et les moyens de sa mise en oeuvre.

Suivant la présente invention, on fait usage de ces moyens pour surveiller également l'efficacité du pot catalytique chauffé 1. On tire parti à cet égard de la présence normale, dans celui-ci, d'un capteur de température 10. Lors d'un démarrage à froid du moteur, le calculateur 7 actionne le module de puissance 6 pour assurer la fourniture par la batterie 5 d'un courant électrique de chauffage du pot 1. Un échauffement rapide (d'une durée typique d'une minute environ) du pot 1 étant nécessaire pour limiter la pollution, la batterie fournit un très fort courant, de l'ordre de plusieurs centaines d'ampères, au pot catalytique chauffé qui absorbe alors une puissance de 2 à 3 kW, par exemple. Le capteur de température 10 fournit son signal de sortie au calculateur 7 qui régule l'alimentation électrique du pot de manière à empêcher tout risque d'incendie.

Au démarrage à froid du moteur, la composition du mélange air/carburant est classiquement régulée en boucle ouverte par le calculateur 7, la richesse en carburant du mélange étant alors supérieure à la stoechiométrie pour faciliter le démarrage, cet enrichissement du mélange étant par ailleurs générateur d'une pollution importante pendant un intervalle de temps qu'il faut donc réduire au minimum, d'où l'intérêt de la présence du pot catalytique chauffé.

Suivant la présente invention, pendant cette phase de démarrage à froid du moteur, quand la température mesurée par le capteur 10 atteint une température Tₛ de seuil prédéterminée, typiquement de l'ordre de 350 à 400°C, le calculateur 7 cesse de commander en boucle ouverte la composition du mélange air/carburant et active les moyens de régulation en boucle fermée de ce mélange.

Suivant l'invention encore, quand le dispositif de traitement des gaz d'échappement comprend une injection d'air telle que 4, le calculateur 7 coupe celle-ci en même temps qu'il active les moyens de régulation en boucle fermée du mélange air/carburant, de manière à ne pas perturber le fonctionnement normal de ces moyens.

On se trouve alors dans les conditions de mise en oeuvre du procédé de surveillance du pot trifonctionnel décrit dans la demande de brevet français précitée. Le calculateur exécute alors ce procédé et, comme décrit dans cette demande de brevet, observe le signal de sortie de la sonde 9 de "diagnostic".

Si alors le pot catalytique chauffé fonctionne correctement, les gaz d'échappement sont suffisamment réchauffés, à la fois grâce au chauffage électrique du pot et grâce aux réactions exothermiques d'oxydation qu'il catalyse, pour que le pot trifonctionnel soit capable d'absorber les variations de richesse du mélange air/carburant par rapport à la stoechiométrie. La capacité de stockage d'oxygène du pot trifonctionnel 9 (supposé efficace) n'est alors pas dépassée et le signal de sortie de la sonde 9 n'oscille pas.

Cette non oscillation peut alors être interprétée comme significative du bon fonctionnement du pot catalytique chauffé et, du même coup, de l'ensemble des deux pots.

Dans le cas contraire (oscillations du signal de sortie de la sonde 9) on diagnostique une efficacité insuffisante du pot chauffé, qui ne permet pas alors au pot trifonctionnel d'absorber les variations de richesse, quand bien même celui-ci serait en bon état de fonctionnement.

Le procédé suivant l'invention est illustré par les chronogrammes de la figure 2 où l'on a représenté en A l'évolution du signal de sortie du capteur de température 10, en B l'évolution du signal de sortie de la sonde 8, en C l'évolution du signal de sortie de la sonde 9 quand le pot catalytique chauffé 1 est en bon état de fonctionnement et en D l'évolution du signal de sortie de cette même sonde quand ce pot présente une efficacité insuffisante.

Sur le graphe A, il apparaît que la température du catalyseur chauffé croit jusqu'à une température prédéterminée, maintenue par régulation entre deux seuils fixés, à titre d'exemple, à 380 et 400°C respectivement, jusqu'a un instant t₁ prédéterminé. Pendant l'intervalle de temps [0,t₁], l'injection d'air 4 est activée et la richesse du mélange air/carburant est ajustée en boucle ouverte par le calculateur 7. Suivant l'invention, à l'expiration de cet intervalle de temps, de l'ordre de une minute par exemple, on coupe l'injection d'air 4, on coupe le chauffage électrique du pot 8 censé alors se maintenir par les réactions exothermiques qu'il catalyse et on commande l'activation des moyens de régulation en boucle fermée du mélange air/carburant. Le signal de sortie de la sonde 8 "de régulation" (voir graphe B) commence alors à osciller normalement dans le cadre de cette régulation, comme il est bien connu. En ce qui concerne la sonde 9 de "diagnostic", si le catalyseur chauffé 1 est suffisamment efficace, l'ensemble des deux pots (le deuxième étant supposé efficace) doit être capable d'absorber les fluctuations de richesse du mélange air/carburant et le signal de sortie de la sonde (voir graphe C) reste stable, sans oscillation. Dans le cas contraire (graphe D) des oscillations apparaissent sur le signal de sortie de la sonde 9, ces fluctuations étant alors significatives d'un défaut d'efficacité du pot catalytique chauffé, toujours dans l'hypothèse où le bon fonctionnement du pot 2 aura été vérifié séparément par le procédé décrit dans la demande de brevet français précitée.

Ainsi, grâce à la présente invention, on fait un double usage, particulièrement économique, des moyens de surveillance de l'efficacité du catalyseur trifonctionnel, ceux-ci étant utilisés en outre, d'une manière particulière, pour surveiller aussi l'efficacité du pot catalytique chauffé.

Bien entendu l'invention n'est pas limitée au mode de réalisation décrit et représenté qui n'a été donné qu'à titre d'exemple. Ainsi, le pot catalytique 1 pourrait catalyser aussi des réactions de réduction et donc être "trifonctionnel". De telles structures de pot dépendent de choix de construction sans rapport avec la présente invention.

## Revendications

1. Procédé de surveillance de l'efficacité d'un pot catalytique, divisé en un pot chauffé (1) et un pot trifonctionnel (2) non chauffé, le dit pot catalytique étant placé dans une ligne de sortie des gaz d'échappement d'un moteur à combustion interne associé à:
(a) des moyens de régulation en boucle fermée de la composition d'un mélange air/carburant d'alimentation du moteur par l'intermédiaire d'au moins un injecteur de carburant dont le temps d'ouverture est commandé par ces moyens, les dits moyens de régulation comportant une sonde à oxygène (8) placée en amont du pot catalytique et
(b) des moyens de surveillance de l'efficacité du pot catalytique comprenant une sonde à oxygène (9) à signal de sortie commutant entre deux niveaux et placée en aval du pot, ces moyens de surveillance commandant une variation temporelle forcée du temps d'ouverture de l'injecteur en relation fonctionnelle avec l'excursion de la capacité de stockage d'oxygène du pot pour déduire d'une oscillation du signal de sortie de la sonde une efficacité insuffisante du pot,
caractérisé en ce que, pendant un démarrage à froid du moteur avec régulation en boucle ouverte de la richesse du mélange air/carburant, on commande l'activation des moyens de régulation en boucle fermée de ce mélange quand la température du pot chauffé (1) dépasse une température (T_{S}) prédéterminée, et on déduit de l'apparition éventuelle d'une oscillation dans le signal de sortie de la sonde à oxygène (9), une efficacité insuffisante du pot catalytique chauffé (1).

2. Procédé conforme à la revendication 1, appliqué à un pot catalytique chauffé associé à des moyens d'injection d'air (4) dans la ligne de sortie des gaz d'échappement, en amont dudit pot, caractérisé en ce qu'on coupe ces moyens d'injection en même temps que l'on active les moyens de régulation en boucle fermée du mélange air/carburant.

3. Procédé conforme à la revendication 1 ou 2, caractérisé en ce que le pot catalytique chauffé (1) ne catalyse que des réactions d'oxydation des gaz d'échappement.

## Patentansprüche

1. Verfahren zum Überwachen des Wirkungsgrades eines katalytischen Konverters, der in einen beheizten Konverter (1) und einen unbeheizten Dreiwege-Konverter (2) unterteilt ist, wobei der katalytische Konverter in einer Abgas-Auslaßleitung eines Verbrennungsmotors angeordnet ist, welcher zugeordnet ist:
(a) Mitteln, mit denen die Zusammensetzung eines dem Motor zugeführten Luft/Kraftstoff-Gemisches über mindestens eine Kraftstoff-Einspritzvorrichtung geregelt wird, deren Öffnungszeit durch diese Mittel gesteuert wird, wobei diese Regelmittel eine Sauerstoffsonde (8) aufweisen, die stromauf des katalytischen Konverters angeordnet ist, und
(b) Mitteln zum Überwachen des Wirkungsgrades des katalytischen Konverters mit einer Sauerstoffsonde (9), deren Ausgangssignal sich zwischen zwei Werten ändert und die stromab des Konverters angeordnet ist, wobei diese Überwachungsmittel eine erzwungene zeitliche Änderung der Öffnungszeit der Einspritzvorrichtung in funktioneller Beziehung zu einer Änderung der Sauerstoffaufnahmefähigkeit des Konverters bewirken, um aus einer Schwingung des Ausgangssignals der Sonde auf einen unzureichenden Wirkungsgrad des Konverters zu schließen,
dadurch gekennzeichnet, daß während eines Kaltstartes des Motors, bei dem der Kraftstoffgehalt des Luft/Kraftstoff-Gemisches im offenen Regelkreis geregelt wird, die Mittel zum Regeln dieses Gemisches im geschlossenen Regelkreis aktiviert werden, wenn die Temperatur des beheizten Konverters (1) eine vorgegebene Temperatur (T_{S}) überschreitet, und aus einer gegebenenfalls auftretenden Schwingung des Ausgangssignals der Sauerstoffsonde (9) auf einen unzureichenden Wirkungsgrad des beheizten katalytischen Konverters (1) geschlossen wird.

2. Verfahren nach Anspruch 1, angewendet bei einem beheizten katalytischen Konverter, bei dem Lufteinblasmittel (4) in der Abgas-Ausgangsleitung stromauf des Konverters angeordnet sind, dadurch gekennzeichnet, daß die Einblasmittel zur selben Zeit geschlossen werden, zu der die Mittel, mit denen das Luft/Kraftstoff-Gemisch im geschlossenen Regelkreis geregelt wird, aktiviert werden.

3. Verfahren nach Anspruch 1 oder 2, dadurch gekennzeichnet, daß der beheizte katalytische Konverter (1) nur Oxidationsreaktionen des Abgases katalysiert.

## Claims

1. Method for monitoring the effectiveness of a catalytic converter, split into a heated converter (1) and a non-heated three-way converter (2), said catalytic converter being placed in the exhaust gas outlet line from an internal combustion engine associated with:
(a) means for closed-loop regulation of the composition of an air/fuel mixture supplied to the engine via at least one fuel injector, the open time of which is controlled by these means, said regulating means including an oxygen probe (8) placed upstream of the catalytic converter and
(b) means for monitoring the effectiveness of the catalytic converter, comprising an oxygen probe (9) with an output signal which switches between two levels and which is placed downstream of the converter, these monitoring means controlling a forced temporal variation in the open time of the injector as a function of the change in the converter's oxygen-storage capability in order to deduce insufficient effectiveness of the converter from fluctuation in the output signal of the probe,
characterized in that, during the starting of the engine from cold with open-loop regulation of the richness of the air/fuel mixture, means for the closed-loop regulation of this mixture are activated when the temperature of the heated converter (1) exceeds a predetermined temperature (Tₛ) and insufficient effectiveness of the heated catalytic converter (1) is deduced from the appearance of any fluctuation in the output signal of the oxygen probe (9).

2. Method according to Claim 1, applied to a heated catalytic converter associated with means (4) for injecting air into the exhaust gas outlet line upstream of said converter, characterized in that these injection means are cut off at the same time as the means for the closed-loop regulation of the air/fuel mixture are activated.

3. Method according to Claim 1 or 2, characterized in that the heated catalytic converter (1) merely catalyses oxidation reactions of the exhaust gases.
